# EUROPEAN PATENT SPECIFICATION

(11) **EP 4 509 583 B1**
(45) Date of publication and mention of the grant of the patent: **25.11.2026**
(21) Application number: 23816019.6
(22) Date of filing: 29.05.2023
(51) Int. Cl.: C10M 111/02, C10M 171/00, C10M 105/02, C09K 5/04, C10N 20/02, C10N 30/02, C10N 30/06, C10N 40/30

(54) **BASE OIL FOR REFRIGERATING MACHINE OIL, REFRIGERATING MACHINE OIL, AND WORKING FLUID COMPOSITION**
BASISÖL FÜR KÄLTEMASCHINENÖL, KÄLTEMASCHINENÖL UND ARBEITSFLUIDZUSAMMENSETZUNG
HUILE DE BASE POUR HUILE DE MACHINE FRIGORIFIQUE, HUILE DE MACHINE FRIGORIFIQUE ET COMPOSITION DE FLUIDE DE TRAVAIL

(30) Priority: 30.05.2022 JP 2022087660
(43) Date of publication of application: 19.02.2025
(73) Proprietor: ENEOS Corporation, Chiyoda-ku Tokyo 100-8162 (JP)
(72) Inventor: ANDO Makoto, Tokyo 100-8162 (JP); NARA Fumiyuki, Tokyo 100-8162 (JP); OGATA Hidetoshi, Tokyo 100-8162 (JP); MIZUTANI Yuya, Tokyo 100-8162 (JP); TAKAKI Tomohiro, Tokyo 100-8162 (JP)
(74) Representative: Grünecker Patent- und Rechtsanwälte PartG mbB
(86) International application number: PCT/JP2023/019938
(87) International publication number: WO 2023/234262

(56) References cited:
- EP-A1- 1 995 299
- WO-A1-2007/026646
- WO-A1-2007/105452
- CN-A- 104 419 495
- CN-A- 112 980 550
- JP-A- 2000 119 671
- JP-A- 2021 522 378
- JP-A- H09 208 980
- US-A- 3 208 940
- US-A- 3 208 941
- US-A- 5 809 628
- US-A1- 2013 012 419
- US-A1- 2021 095 222

## Description

### Technical Field

The present disclosure relates to a base oil for refrigerating machine oil, a refrigerating machine oil, and a working fluid composition.

### Background Art

In refrigerating machines, there is an increasing demand to replace refrigerants having relatively high Global Warming Potential (GWP) with low GWP refrigerants having, for example, GWP of less than 150. Examples of low GWP refrigerants include carbon dioxide (R744) refrigerant and hydrocarbon refrigerants.

Additionally, energy efficiency is also required for refrigerating machines. Generally, since the lower the viscosity of the refrigerating machine oil, the lower the stirring resistance, reducing the viscosity of the refrigerant oil leads to energy savings in the refrigerating machine. For example, Patent Document 1 discloses a refrigerating machine oil having VG3 to VG8. Additionally, Patent Document 2 discloses a refrigerating machine oil containing a mixed base oil composed of a low viscosity base oil and a high viscosity base oil. However, a refrigerating machine oil simply having a low viscosity is not always preferable, as it may become difficult to maintain the oil film on sliding parts, which may lead to an increase in the friction coefficient when the viscosity of the refrigerant oil decreases. Patent document 3 discloses a refrigerating machine oil composition, characterized by comprising a mixed base oil which has a kinematic viscosity at 40°C of 0.11 to 8 mm2 /s and which is composed of a low-viscosity base oil (A) having a kinematic viscosity at 40°C of 5 mm2 /s or lower, and a high-viscosity base oil (B) having a kinematic viscosity at 40°C of 20 to 400 mm2 /s, each of the base oil (A) and (B) being composed of at least one species selected from among a mineral oil, a synthetic hydrocarbon compound, an oxygen-containing compound, and a sulfur-containing compound, wherein for a synthetic base oil a C6 to C20 α-olefin oligomer produced in the presence of a metallocene catalyst may be selected.

### Citation List

### Patent Documents

[Patent Document 1] WO 2006/062245
[Patent Document 2] WO 2007/105452
[Patent document 3] EP 1 995 299

### Summary of Invention

### Technical Problem

One aspect of the present invention aims to provide a base oil for a refrigerating machine oil and a refrigerating machine oil that can reduce the friction coefficient.

### Solution to Problem

According to the studies by the inventors of the present invention, it has been found that using a mixed base oil containing an α-olefin and a hydrocarbon oil other than the α-olefin can reduce the friction coefficient compared to base oils containing only the α-olefin or only the hydrocarbon oil other than the α-olefin.

The present invention is disclosed in the appended claims.

### Advantageous Effects of Invention

According to one aspect of the present invention, it is possible to provide a base oil for a refrigerating machine oil and a refrigerating machine oil that can reduce the friction coefficient. In one aspect of the present invention, the effect of reducing the friction coefficient can be obtained even when the base oil for a refrigerating machine oil and the refrigerating machine oil have a low viscosity.

### Description of Embodiments

Hereinafter, embodiments of the present invention will be described in detail. One embodiment of the present invention is a base oil for a refrigerating machine oil containing an α-olefin and a hydrocarbon oil other than the α-olefin.

The α-olefin is an aliphatic hydrocarbon having a carbon-carbon double bond at the α-position. The α-olefin is represented by the following formula (1): 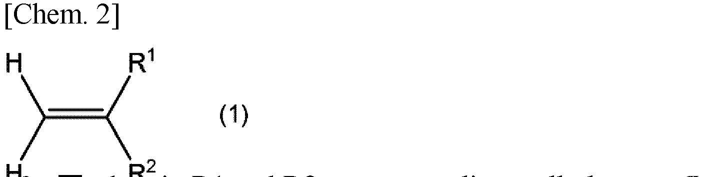 wherein R1 and R2 represent a linear alkyl group, and wherein the α-olefin has a kinematic viscosity at 40°C of less than 20 mm²/s, and the hydrocarbon oil other than the α-olefin has a kinematic viscosity at 40°C of less than 20 mm²/s.

The alkyl groups of R¹ and R² are linear. The number of carbon atoms in the alkyl groups of R¹ and R² may each be 6 or more, 7 or more, 8 or more, 9 or more, or 10 or more, and may be 20 or less, 19 or less, 18 or less, 17 or less, 16 or less, or 15 or less, 14 or less, 13 or less, or 12 or less. Additionally, the number of carbon atoms C1 in the alkyl group of R¹ and the number of carbon atoms C2 in the alkyl group of R² may satisfy C 1=C2+2, and the sum of C1 and C2 may be 12 or more, 13 or more, 14 or more, 15 or more, or 16 or more, and may be 30 or less, 28 or less, 26 or less, 24 or less, 22 or less, or 20 or less.

The kinematic viscosity at 40°C of the α-olefin may be 1 mm²/s or higher, 1.5 mm²/s or higher, or 2 mm²/s or higher, and is less than
20 mm²/s, 15 mm²/s or lower, 10 mm²/s or lower, 7 mm²/s or lower, 5 mm²/s or lower, 4.5 mm²/s or lower, 4 mm²/s or lower, 3.5 mm²/s or lower, or 3 mm²/s or lower. The kinematic viscosity in this specification means the kinematic viscosity measured in accordance with JIS K2283:2000.

The kinematic viscosity at 100°C of the α-olefin may be 0.5 mm²/s or higher, 0.7 mm²/s or higher, or 0.8 mm²/s or higher, and may be 10 mm²/s or lower, 5 mm²/s or lower, 3 mm²/s or lower, 2 mm²/s or lower, 1.5 mm²/s or lower, 1.2 mm²/s or lower, or 1 mm²/s or lower.

The flash point of the α-olefin may be 70°C or higher, 80°C or higher, or 100°C or higher, and may be 160°C or lower, 150°C or lower, or 140°C or lower. The flash point in this specification means the flash point measured in accordance with the Cleveland Open Cup (COC) method described in JIS K2265-4:2007.

The content of the α-olefin may be 5% by mass or more, 10% by mass or more, 20% by mass or more, 30% by mass or more, 40% by mass or more, or 50% by mass or more, and may be 90% by mass or less, 80% by mass or less, 70% by mass or less, 60% by mass or less, or 50% by mass or less, based on the total amount of the base oil.

The hydrocarbon oil other than the α-olefin (hereinafter simply referred to as "hydrocarbon oil") may be a mineral oil-based hydrocarbon oil or a synthetic hydrocarbon oil. Examples of the mineral oil-based hydrocarbon oil include normal paraffin-based, isoparaffin-based, or naphthenic-based refined mineral oils obtained by refining a crude oil or its distillation residue oil through appropriate combinations of conventional petroleum refining processes (solvent dewaxing, solvent extraction, hydrocracking, solvent deasphalting, catalytic dewaxing, hydrofinishing, sulfuric acid washing, clay treatment, distillation, etc.). Examples of the synthetic hydrocarbon oil include poly-α-olefins or their hydrogenated products, synthetic normal paraffins obtained by the Fischer-Tropsch reaction from carbon monoxide and hydrogen, isoparaffins obtained by hydrocracking/isomerizing synthetic normal paraffins, alkylbenzenes, and alkylnaphthalenes. These hydrocarbon oils can be used alone or in combination of two or more.

The hydrocarbon oil may contain a normal paraffin (a normal paraffin-based base oil containing a normal paraffin as the main component). The normal paraffin may be a normal paraffin obtained by refining a normal paraffin or a wax-containing component obtained in the kerosene and light oil production process, dewaxing process, Fischer-Tropsch synthesis, etc., through appropriate combinations of hydrocracking, hydroisomerization, hydrodewaxing, hydrofinishing, distillation, etc.

The hydrocarbon oil may preferably contain an isoparaffin and may be an isoparaffin-based base oil containing an isoparaffin as the main component. The isoparaffin may be an isoparaffin obtained by refining components containing a normal paraffin obtained in the dewaxing process of the petroleum refining process or Fischer-Tropsch synthesis, or a polymer of olefins such as ethylene, propylene, butylene, and diisobutylene, through appropriate combinations of hydrocracking, hydroisomerization, hydrodewaxing, hydrofinishing, distillation, etc.

The hydrocarbon oil may preferably contain the normal paraffin (the normal paraffin-based base oil) in addition to the isoparaffin (the isoparaffin-based base oil). In this case, the mass ratio of the content of the normal paraffin (the normal paraffin-based base oil) to the content of the isoparaffin (the isoparaffin-based base oil) may be 1/7 or more, 1/6 or more, or 1/5 or more, and may be 1/1 or less, 1/2 or less, or 1/3 or less.

The hydrocarbon oil may be an isoparaffin-based base oil containing a normal paraffin. For example, an isoparaffin-based base oil with a desired normal paraffin ratio can be obtained by mixing and fractionating a normal paraffin corresponding to the kerosene and light oil fraction obtained by the Fischer-Tropsch reaction of carbon monoxide and hydrogen and an isoparaffin obtained by hydrocracking/isomerizing a longer-chain normal paraffin than the kerosene and light oil fraction.

In these hydrocarbon oils, the content of the normal paraffin relative to the total amount of the isoparaffin and the normal paraffin may be 1% by mass or more, 5% by mass or more, 10% by mass or more, or 15% by mass or more, and may be 70% by mass or less, 50% by mass or less, 30% by mass or less, or 25% by mass or less.

The kinematic viscosity at 40°C of the hydrocarbon oil may be 1 mm²/s or higher, 1.5 mm²/s or higher, or 2 mm²/s or higher, and is less than 20 mm²/s, 15 mm²/s or lower, 10 mm²/s or lower, 7 mm²/s or lower, 5 mm²/s or lower, 4.5 mm²/s or lower, 4 mm²/s or lower, 3.5 mm²/s or lower, or 3 mm²/s or lower.

The kinematic viscosity at 100°C of the hydrocarbon oil may be 0.5 mm²/s or higher, 0.7 mm²/s or higher, or 0.8 mm²/s or higher, and may be 10 mm²/s or lower, 5 mm²/s or lower, 3 mm²/s or lower, 2 mm²/s or lower, 1.5 mm²/s or lower, 1.2 mm²/s or lower, or 1 mm²/s or lower.

The flash point of the hydrocarbon oil may be 70°C or higher, 80°C or higher, or 100°C or higher, and may be 160°C or lower, 150°C or lower, or 140°C or lower.

The number of carbon atoms or the average number of carbon atoms in the hydrocarbon oil may be 10 or more, 12 or more, or 13 or more, and may be 30 or less, 20 or less, or 18 or less. The number of carbon atoms and the average number of carbon atoms in the hydrocarbon oil in this specification are measured by the hydrocarbon type analysis method (GC method) using gas chromatography under the following conditions, and the peak area percentages corresponding to normal paraffin and non-normal paraffin for each carbon number are considered to be approximately the same as the mass percentages, and calculated and aggregated accordingly, and then summed or averaged. Other methods may be used if equivalent results are obtained.

### (Gas Chromatography Conditions)

Column: Liquid phase non-polar column (length 30 m, inner diameter 0.25 mmφ, liquid phase thickness 0.1 µm)
Injection temperature: 350°C
Detector: FID 360°C
Temperature rise conditions: 50°C to 350°C (temperature rise rate: 6 °C/min)
Carrier gas: Helium
Injection method: Split sample injection amount: 1 µL (10% toluene solution)

The content of the hydrocarbon oil may be 5% by mass or more, 10% by mass or more, 20% by mass or more, 30% by mass or more, 40% by mass or more, or 50% by mass or more, and may be 90% by mass or less, 80% by mass or less, 70% by mass or less, 60% by mass or less, or 50% by mass or less, based on the total amount of the base oil.

The kinematic viscosity at 40°C of the base oil for a refrigerating machine oil may be 1 mm²/s or higher, 1.5 mm²/s or higher, or 2 mm²/s or higher, and may be 20 mm²/s or lower, 15 mm²/s or lower, 10 mm²/s or lower, 7 mm²/s or lower, 5 mm²/s or lower, 4.5 mm²/s or lower, 4 mm²/s or lower, 3.5 mm²/s or lower, or 3 mm²/s or lower.

The kinematic viscosity at 100°C of the base oil for a refrigerating machine oil may be 0.5 mm²/s or higher, 0.7 mm²/s or higher, or 0.8 mm²/s or higher, and may be 10 mm²/s or lower, 5 mm²/s or lower, 3 mm²/s or lower, 2 mm²/s or lower, 1.5 mm²/s or lower, 1.2 mm²/s or lower, or 1 mm²/s or lower.

In one embodiment, the base oil for a refrigerating machine oil can reduce the friction coefficient compared to base oils containing only the α-olefin or only the hydrocarbon oil other than the α-olefin, while having low viscosity as described above, by containing the α-olefin and the hydrocarbon oil other than the α-olefin.

Another embodiment of the present invention is a refrigerating machine oil containing the above base oil for a refrigerating machine oil (hereinafter simply referred to as "base oil"). The refrigerating machine oil may contain the base oil as the main component. The content of the base oil may be 50% by mass or more, 70% by mass or more, 90% by mass or more, or 95% by mass or more, based on the total amount of the refrigerating machine oil.

The refrigerating machine oil may further contain an oxygen-containing oil in addition to the above base oil. Examples of oxygen-containing oils include esters, ethers, carbonates, ketones, silicones, and polysiloxanes. Note that the term "ester" here does not include polymers described later. Examples of esters include monoesters, polyol esters, aromatic esters, dibasic acid esters, complex esters, carbonate esters, and mixtures thereof. Examples of ethers include polyvinyl ethers, polyalkylene glycols, polyphenyl ethers, and perfluoroethers. The oxygen-containing oil preferably contains a monoester of a monovalent aliphatic alcohol and a monovalent fatty acid, and may further contain a polyol ester of a monovalent fatty acid and an alcohol having 2 to 6 hydroxyl groups.

Examples of the monovalent aliphatic alcohol constituting the ester as described above include monovalent aliphatic alcohols having 1 to 20 carbon atoms, preferably 4 to 18 carbon atoms, more preferably 4 to 12 carbon atoms. Examples of the monovalent fatty acid constituting the ester as described above include monovalent fatty acids having 1 to 20 carbon atoms, preferably 4 to 18 carbon atoms, more preferably 4 to 12 carbon atoms. Examples of the alcohol having 2 to 6 hydroxyl groups constituting the ester as described above include neopentyl glycol, trimethylolpropane, pentaerythritol, and dipentaerythritol.

The refrigerating machine oil may further contain an additive. From the viewpoint of improving wear resistance, the refrigerating machine oil preferably further contains an antiwear agent (also called an extreme pressure agent) as an additive. Examples of the antiwear agent include phosphorus-containing antiwear agents. Examples of phosphorus-containing antiwear agents include phosphate esters, thiophosphate esters, acidic phosphate esters, amine salts of acidic phosphate esters, and chlorinated phosphate esters. The antiwear agent (preferably a phosphorus-containing antiwear agent) may be used alone or in combination of two or more. The phosphorus-containing antiwear agent is preferably one or more selected from phosphate esters and thiophosphate esters.

Examples of the phosphate esters include trialkyl phosphates, trialkenyl phosphates, and triaryl phosphates. Examples of the trialkyl phosphates include tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetra decyl phosphate, tripentadecyl phosphate, trihexadecyl phosphate, triheptadecyl phosphate, and trioctadecyl phosphate. Examples of the trialkenyl phosphates include trioleyl phosphate. Examples of triaryl phosphates include triphenyl phosphate, tricresyl phosphate, tri(ethylphenyl) phosphate, tri(butylphenyl) phosphate, trixylenyl phosphate, cresyldiphenyl phosphate, and xylenyldiphenyl phosphate. The phosphate ester is preferably a triaryl phosphate, more preferably selected from triphenyl phosphate and tricresyl phosphate, and even more preferably tricresyl phosphate.

Examples of the thiophosphate esters include trialkyl phosphorothionates, trialkenyl phosphorothionates, and triaryl phosphorothionates. Examples of the trialkyl phosphorothionates include tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetra decyl phosphorothionate, tripentadecyl phosphorothionate, trihexadecyl phosphorothionate, triheptadecyl phosphorothionate, and trioctadecyl phosphorothionate. Examples of the trialkenyl phosphorothionates include trioleyl phosphorothionate. Examples of the triaryl phosphorothionates include triphenyl phosphorothionate, tricresyl phosphorothionate, trixylenyl phosphorothionate, cresyldiphenyl phosphorothionate, and xylenyldiphenyl phosphorothionate. The thiophosphate ester is preferably triphenyl phosphorothionate.

The content of the antiwear agent (preferably a phosphorus-containing antiwear agent) may be 0.1% by mass or more, 0.5% by mass or more, or 1% by mass or more, and may be 5% by mass or less, 4% by mass or less, or 3% by mass or less, based on the total amount of the refrigerating machine oil.

The refrigerating machine oil may further contain a polymer. The polymer may be a polymer having a kinematic viscosity at 40°C higher than that of the above base oil. Examples of such polymers include polymers containing an unsaturated carboxylic acid ester as a monomer unit. The polymer is obtained by polymerizing one or more monomers containing an unsaturated carboxylic acid ester, which is an ester of an unsaturated carboxylic acid and an alcohol.

The polymer may contain only the unsaturated carboxylic acid ester as the monomer unit, or may further contain an additional monomer (monomer copolymerizable with the unsaturated carboxylic acid ester). That is, the polymer may be a homopolymer of one unsaturated carboxylic acid ester, a copolymer of two or more unsaturated carboxylic acid esters, or a copolymer of one or more unsaturated carboxylic acid esters and one or more additional monomers.

The unsaturated carboxylic acid constituting the unsaturated carboxylic acid ester has at least one polymerizable unsaturated bond (polymerizable carbon-carbon double bond) and at least one carboxyl group, and may be an unsaturated monocarboxylic acid having one polymerizable unsaturated bond and one carboxyl group, or an unsaturated dicarboxylic acid having one polymerizable unsaturated bond and two carboxyl groups. Examples of the unsaturated monocarboxylic acid include acrylic acid, methacrylic acid (collectively referred to as "(meth)acrylic acid"), and crotonic acid. Examples of the unsaturated dicarboxylic acid include maleic acid, fumaric acid, citraconic acid, mesaconic acid, and itaconic acid.

The alcohol constituting the unsaturated carboxylic acid ester may be an alcohol having 1 to 40 carbon atoms, preferably an alcohol having 1 to 18 carbon atoms, more preferably an alcohol having 1 to 8 carbon atoms. These alcohols may be linear or branched. The alcohol may contain an alcohol having 1 to 18 carbon atoms and an alcohol having 20 to 40 carbon atoms. These alcohols may be aliphatic alcohols.

When the unsaturated carboxylic acid ester is an unsaturated dicarboxylic acid ester, the unsaturated dicarboxylic acid ester preferably contains at least one unsaturated dicarboxylic acid ester having a linear alkyl group with 4 to 10 carbon atoms.

There are no particular restrictions on the additional monomer other than the unsaturated carboxylic acid ester, but examples thereof include unsaturated carboxylic acids or their anhydrides, and unsaturated hydrocarbon compounds having polymerizable unsaturated bonds, as exemplified by the unsaturated carboxylic acids constituting the unsaturated carboxylic acid esters described above. The unsaturated hydrocarbon may be an unsaturated hydrocarbon compound having 2 to 20 carbon atoms, preferably an α-olefin having 2 to 20 carbon atoms or styrene.

The polymer is preferably a copolymer of the unsaturated carboxylic acid esters (two or more unsaturated carboxylic acid esters), or a copolymer of the unsaturated carboxylic acid ester (one or more unsaturated carboxylic acid ester(s)) and an α-olefin (one or more α-olefin(s)). The copolymer of the unsaturated carboxylic acid esters is preferably a copolymer of (meth)acrylic acid esters. The copolymer of the unsaturated carboxylic acid ester and the α-olefin is preferably one or more selected from a copolymers of a (meth)acrylic acid ester and an α-olefins, and a copolymer of an unsaturated dicarboxylic acid ester and an α-olefin, more preferably a copolymer of an unsaturated dicarboxylic acid ester and an α-olefin.

Preferred examples of the unsaturated dicarboxylic acid ester in the copolymer of the unsaturated dicarboxylic acid ester and the α-olefin include monoesters or diesters of unsaturated dicarboxylic acids such as maleic acid, fumaric acid, citraconic acid, mesaconic acid, and itaconic acid, with aliphatic alcohols having 3 to 10 carbon atoms such as propanol, butanol, pentanol, hexanol, heptanol, octanol, nonanol, and decanol. The aliphatic alcohol having 3 to 10 carbon atoms is preferably a linear aliphatic alcohol having 4 to 10 carbon atoms. The unsaturated dicarboxylic acid ester is preferably a maleic acid ester. Preferred examples of maleic acid esters include dimethyl maleate, diethyl maleate, dipropyl maleate, dibutyl maleate, dipentyl maleate, dihexyl maleate, diheptyl maleate, dioctyl maleate, and didecyl maleate.

When the polymer is a copolymer, the content of the unsaturated carboxylic acid ester may be 10% by mole or more, 30% by mole or more, or 50% by mole or more, and may be 90% by mole or less, 70% by mole or less, or 50% by mole or less, based on the total monomer units constituting the copolymer.

When the polymer is the copolymer of the unsaturated carboxylic acid ester and the α-olefin, the molar ratio of the unsaturated carboxylic acid ester to the α-olefin is not particularly limited, but is preferably 1/9 or more, more preferably 3/7 or more, and preferably 9/1 or less, more preferably 7/3 or less.

The number average molecular weight (Mn) of the polymer is preferably 300 or more, more preferably 1000 or more, even more preferably 1500 or more, and may be 2000 or more, 3000 or more, or 4000 or more, and is preferably 500000 or less, more preferably 50000 or less, even more preferably 30000 or less, and may be 20000 or less, 15000 or less, or 10000 or less.

The weight average molecular weight (Mw) of the polymer is preferably 400 or more, more preferably 1000 or more, even more preferably 2000 or more, particularly preferably 3000 or more, and may be 4000 or more, 5000 or more, 6000 or more, 7000 or more, 8000 or more, or 9000 or more, and preferably 10000000 or less, more preferably 100000 or less, even more preferably 50000 or less, particularly preferably 30000 or less, and may be 20000 or less.

The Mw/Mn of the polymer is preferably 1.2 or more, more preferably 1.5 or more, even more preferably 1.7 or more, particularly preferably 2 or more, and preferably 5 or less, more preferably 3.5 or less, even more preferably 3 or less, and may be 2.5 or less.

The "weight average molecular weight (Mw)" and "number average molecular weight (Mn)" in this specification each means the weight average molecular weight and number average molecular weight in terms of polystyrene, determined by gel permeation chromatography (GPC) using a Waters APC XT column and tetrahydrofuran as the mobile phase (standard substance: polystyrene).

The kinematic viscosity at 100°C of the polymer is preferably 10 mm²/s or higher, more preferably 20 mm²/s or higher, even more preferably 100 mm²/s or higher, and preferably 100000 mm²/s or lower or 10000 mm²/s or lower, more preferably 1000 mm²/s or lower, even more preferably 800 mm²/s or lower, and may be 500 mm²/s or lower.

The kinematic viscosity at 40°C of the polymer is preferably 100 mm²/s or higher, more preferably 200 mm²/s or higher, even more preferably 400 mm²/s or higher, and may be 500 mm²/s or higher or 1000 mm²/s or higher, and preferably 100000 mm²/s or lower, more preferably 20000 mm²/s or lower, even more preferably 15000 mm²/s or lower, and may be 10000 mm²/s or lower or 5000 mm²/s or lower.

The viscosity index of the polymer is preferably 80 or higher, more preferably 140 or higher, and may be 180 or higher or 200 or higher, and preferably 400 or lower, more preferably 300 or lower, and may be 250 or lower. The viscosity index in this specification refers to the viscosity index measured in accordance with JIS K2283:2000.

The polymer according to this embodiment may be added as a polymer additive in the refrigerating machine oil. The polymer additive may further contain an additional component such as a diluent oil for improving handling properties during synthesis, transportation, etc., in addition to the polymer. The physical properties of the polymer (number average molecular weight (Mn), weight average molecular weight (Mw), Mw/Mn, kinematic viscosity at 100°C, kinematic viscosity at 40°C, viscosity index, and residual carbon content) described above can be read as the physical properties of the polymer additive in the state added to the refrigerating machine oil. However, if the polymer additive contains the additional component in addition to the polymer, the number average molecular weight (Mn) and weight average molecular weight (Mw) of the polymer additive means the values measured excluding the additional components.

In calculating each of the average molecular weights of the polymer in the polymer additive or the refrigerating machine oil containing the polymer additive, a sample obtained by separating and excluding the components attributable to the additional component from the polymer additive or the refrigerating machine oil containing the polymer additive by rubber membrane dialysis, etc., may be used, and each of the average molecular weights of the polymer may be calculated by the above-mentioned gel permeation chromatography, or each of the average molecular weights of the polymer may be calculated by excluding the peak portions attributable to the additional components in the calculation process of each of the average molecular weights by the above-mentioned gel permeation chromatography using the polymer additive or the refrigerating machine oil containing the polymer additive.

More specific examples of the polymer (polymer additive) described above include the polymers described in the examples below, but other examples include the following polymers (polymer additives):
Polymer Additive A: Copolymer of (meth)acrylic acid esters (kinematic viscosity at 100°C: 600 mm²/s, Mn: 25000, Mw/Mn: 1.4, residual carbon content: 1.1% by mass)
Polymer Additive B: Copolymer of (meth)acrylic acid esters (kinematic viscosity at 100°C: 370 mm²/s, Mn: 25900, Mw/Mn: 1.3, residual carbon content: 1.1% by mass)
Polymer Additive C: Copolymer of (meth)acrylic acid esters (kinematic viscosity at 100°C: 180 mm²/s, Mn: 3620, Mw/Mn: 2.0, residual carbon content: 1.3% by mass)
Polymer Additive D: Copolymer of (meth)acrylic acid esters (kinematic viscosity at 100°C: 360 mm²/s, Mn: 11000, Mw/Mn: 1.6, residual carbon content: 0.9% by mass)
Polymer Additive E: Copolymer of (meth)acrylic acid esters (kinematic viscosity at 100°C: 380 mm²/s, Mn: 22500, Mw/Mn: 1.5, residual carbon content: 0.1% by mass)
Polymer Additive F: Copolymer of a maleic acid ester and an α-olefin (kinematic viscosity at 40°C: 1980 mm²/s, kinematic viscosity at 100°C: 200 mm²/s, viscosity index 227, Mn: 4500, Mw/Mn: 2.2, residual carbon content: 3.1% by mass)
Polymer Additive G: Copolymer of a maleic acid ester and an α-olefin (kinematic viscosity at 40°C: 4100 *mm²*/*s,* kinematic viscosity at 100°C: 260 mm²/s, viscosity index 190, Mn: 1800, Mw/Mn: 2.7, residual carbon content: 2.8% by mass)
Polymer Additive H: Copolymer of a maleic acid ester and an α-olefin (kinematic viscosity at 40°C: 4300 mm²/s, kinematic viscosity at 100°C: 300 mm²/s, viscosity index 225, Mn: 2000, Mw/Mn: 2.5, residual carbon content: 1.7% by mass)
Polymer Additive 1: Copolymer of a maleic acid ester and an α-olefin (kinematic viscosity at 40°C: 7000 *mm²*/*s,* kinematic viscosity at 100°C: 500 mm²/s, viscosity index 230, Mn: 2650, Mw/Mn: 4.0, residual carbon content: 2% by mass)
Polymer Additive J: Copolymer of a maleic acid ester and an α-olefin (kinematic viscosity at 40°C: 11000 mm²/s, kinematic viscosity at 100°C: 700 mm²/s, viscosity index 250, Mn: 2690, Mw/Mn: 3.1, residual carbon content: 1.5% by mass)
Polymer Additive K: Copolymer of a maleic acid ester and an α-olefin (kinematic viscosity at 40°C: 400 mm²/s, kinematic viscosity at 100°C: 40 mm²/s, viscosity index 160, residual carbon content: 0.8% by mass)
Polymer Additive L: Copolymer of methacrylic acid alkyl esters (the methacrylic acid alkyl esters contain, as main components, methacrylic acid alkyl esters having linear alkyl groups with 1, 12-16, and 18 carbon atoms, and methacrylic acid alkyl esters having 2-position branched alkyl groups with 6, 8, and 10 to less than 20 carbon atoms, Mn: 9300, Mw: 16000, Mw/Mn: 1.7)
Polymer Additive M: Copolymer of a dialkyl maleic acid ester and α-olefins with 8-10 carbon atoms (the dialkyl maleic acid esters contain dialkyl maleic acid esters having linear alkyl groups with 4, 8-10 carbon atoms as main components, Mn: 8300, Mw: 12800, Mw/Mn: 1.5)
Polymer Additive N: Copolymer of methacrylic acid alkyl esters and α-olefin with 10 carbon atoms (the methacrylic acid alkyl esters contain, as main components, methacrylic acid alkyl esters having linear alkyl groups with 12-15 carbon atoms, and methacrylic acid alkyl esters having 2-position branched alkyl groups with 6, 8, and 10 to less than 20 carbon atoms, Mn: 6900, Mw: 9900, Mw/Mn: 1.4)
Polymer Additive O: Copolymer containing, as monomer units, methyl methacrylate, n-dodecyl methacrylate, n-tridecyl methacrylate, n-tetradecyl methacrylate, n-hexadecyl methacrylate, n-octadecyl methacrylate, and 2-decyl-tetradecyl methacrylate (Mn: 10500, Mw: 18000, Mw/Mn: 1.7)

The content of the polymer may be 0.1% by mass or more, 0.5% by mass or more, or 0.8% by mass or more, and may be 5% by mass or less, 2% by mass or less, or 1% by mass or less, based on the total amount of the refrigerating machine oil.

The refrigerating machine oil may further contain an additional additive. Examples of the additional additive include antioxidants, acid scavengers, metal deactivators, pour point depressants, detergents, dispersants, and defoamers. The total content of the additional additive(s) may be 10% by mass or less, or 5% by mass or less, based on the total amount of the refrigerating machine oil.

The kinematic viscosity at 40°C of the refrigerating machine oil may be 1 mm²/s or higher, 1.5 mm²/s or higher, or 2 mm²/s or higher, and may be 20 mm²/s or lower, 15 mm²/s or lower, 10 mm²/s or lower, 7 mm²/s or lower, 5 mm²/s or lower, 4.5 mm²/s or lower, 4 mm²/s or lower, 3.5 mm²/s or lower, or 3 mm²/s or lower.

The kinematic viscosity at 100°C of the refrigerating machine oil may be 0.5 mm²/s or higher, 0.7 mm²/s or higher, or 0.8 mm²/s or higher, and may be 10 mm²/s or lower, 5 mm²/s or lower, 3 mm²/s or lower, 2 mm²/s or lower, 1.5 mm²/s or lower, 1.2 mm²/s or lower, or 1 mm²/s or lower.

In one embodiment, the refrigerating machine oil can reduce the friction coefficient compared to base oils containing only the α-olefin or only the hydrocarbon oil other than the α-olefin, while having low viscosity as described above, by containing the base oil that contains the α-olefin and the hydrocarbon oil other than the α-olefin.

The pour point of the refrigerating machine oil may be 10°C or lower, 0°C or lower, -10°C or lower, -20°C or lower, -30°C or lower, or - 40°C or lower. The pour point in this specification means the pour point measured in accordance with JIS K2269:1987.

The iodine value (gI2/100g) of the refrigerating machine oil may be 2 or higher, 5 or higher, 10 or higher, 15 or higher, or 20 or higher, and may be 75 or lower, 70 or lower, 65 or lower, 60 or lower, or 55 or lower, from the viewpoint of further reducing the friction coefficient. The iodine value in this specification means the iodine value measured in accordance with JIS K0070-1992.

The refrigerating machine oil may be mixed with a refrigerant and be present in a state of a working fluid composition in a refrigerating machine containing a refrigerant circulation system having a compressor, condenser, expansion mechanism, and evaporator. That is, another embodiment of the present invention is a working fluid composition containing the refrigerating machine oil and a refrigerant. The content of the refrigerating machine oil in the working fluid composition may be 1 part by mass or more, or 2 parts by mass or more, and may be 500 parts by mass or less, or 400 parts by mass or less, with respect to 100 parts by mass of the refrigerant.

Examples of the refrigerant include hydrocarbons, saturated hydrofluorocarbons, unsaturated hydrofluorocarbons, fluorine-containing ethers such as perfluoroethers, bis(trifluoromethyl) sulfide, trifluoroiodomethane, ammonia, and carbon dioxide.

The refrigerant preferably contains a hydrocarbon. The content of the hydrocarbon may be 50% by mass or more, 60% by mass or more, 70% by mass or more, 80% by mass or more, 90% by mass or more, or 95% by mass or more, based on the total amount of the refrigerant. The refrigerant may consist of a hydrocarbon.

The hydrocarbon is preferably a hydrocarbon having 1 to 5 carbon atoms, more preferably a hydrocarbon having 2 to 4 carbon atoms. Examples of the hydrocarbon include methane, ethylene, ethane, propylene, propane (R290), cyclopropane, normal butane, isobutane (R600a), cyclobutane, methylcyclopropane, 2-methylbutane, normal pentane, or mixtures of two or more of these. The hydrocarbon is preferably a gas at 25°C and 1 atmosphere, more preferably propane, normal butane, isobutane, 2-methylbutane, or mixtures of these.

### Examples

Hereinafter, the present invention will be described in more detail with reference to the following examples.

Base oils 1 to 9 having the compositions shown in Table 1 (% by mass based on the total amount of the base oil) were prepared using the following α-olefins and hydrocarbon oils other than the α-olefins.

### (α-Olefins)

A1: α-olefin having 16 carbon atoms (α-olefin in which R¹ is a linear alkyl group having 14 carbon atoms, and R² is a hydrogen atom in the formula (1), kinematic viscosity at 40°C: 2.6 mm²/s*,* kinematic viscosity at 100°C: 1.1 mm²/s*,* flash point: 135°C, iodine value: 113 (gI2/100g))
A2: α-olefin having 14 carbon atoms (α-olefin in which R¹ is a linear alkyl group having 12 carbon atoms, and R² is a hydrogen atom in the formula (1), kinematic viscosity at 40°C: 1.9 mm²/s*,* kinematic viscosity at 100°C: 0.9 mm²/s*,* flash point: 113°C, iodine value: 128 (gI2/100g))
A3: α-olefin having 20 carbon atoms (α-olefin in which R¹ is a linear alkyl group having 10 carbon atoms, and R² is a linear alkyl group having 8 carbon atoms in the formula (1), kinematic viscosity at 40°C: 4.5 mm²/s*,* kinematic viscosity at 100°C: 1.7 mm²/s*,* flash point: 181°C, iodine value: 95 (gI2/100g))

### (Hydrocarbon oils other than α-olefins)

B1: synthetic isoparaffin-based base oil containing isoparaffins having 13 to 16 carbon atoms as the main components, obtained by hydrogenation cracking/isomerization/purification and fractionation of paraffin components synthesized by the Fischer-Tropsch reaction from carbon monoxide and hydrogen (isoparaffin: 100% by mass, kinematic viscosity at 40°C: 2.15 mm²/s*,* kinematic viscosity at 100°C: 0.96 mm²/s*,* average carbon number: 14, flash point: 120°C)
B2: normal paraffin-based base oil mainly containing normal paraffins with 13 to 14 carbon atoms, obtained by purification and fractionation of kerosene and light oil fractions obtained in the petroleum refining process (normal paraffin: 99.2% by mass, others: 0.8% by mass, kinematic viscosity at 40°C: 2.09 mm²/s*,* kinematic viscosity at 100°C: 0.97 mm²/s*,* average carbon number: 14, flash point: 122°C)

To each of the base oils 1 to 9, 1.7% by mass of phosphorus-containing antiwear agents (phosphate ester and thiophosphate ester) and 1.0% by mass of polymer additive (copolymer of dialkyl maleic acid esters and α-olefins having 8 to 10 carbon atoms (the dialkyl maleic acid esters contain, as the main components, dialkyl maleic esters having linear alkyl groups with 4, 8 to 10 carbon atoms), Mn: 8300, Mw: 12800, Mw/Mn: 1.5) were added based on the total amount of the refrigerating machine oil to prepare refrigerating machine oils.

### (Evaluation of friction characteristics)

The friction characteristics of each obtained refrigerating machine oil were evaluated as follows. The friction coefficient (µ) was measured under the following conditions using an MTM (Mini Traction Machine) tester (manufactured by PCS Instruments). The results are shown in Tables 1 and 2. The smaller the friction coefficient, the better the friction characteristics.
Ball and disk: Standard test pieces (AISI 52100 standard)
Test temperature: 40°C
Sliding speed: 0.3 to 0.9 m/s (partially extracted)
Load: 10 N
Sliding ratio: 30%
The value of |U_{D}-U_{B}| (m/s) was used as the sliding speed. Here, U_{D} is the speed (m/s) of the disk at the sliding part, and U_{B} is the speed (m/s) of the ball at the sliding part.

**[Table 1] Base oils 1-6, 8-9 are for comparison and not according to the invention.**

| Base oil No. | | | Base oil 1 | Base oil 2 | Base oil 3 | Base oil 4 | Base oil 5 |
|---|---|---|---|---|---|---|---|
| Composition of base oil (% by mass) | α-olefin | A1 | 100 | - | 50 | 20 | 10 |
| | Hydrocarbon oil other than α-olefin | B1 | - | 100 | 50 | 80 | 90 |
| Properties of refrigerating machine oil | Kinematic viscosity at 40°C (mm²/s) | | 2.71 | 2.20 | 2.43 | 2.28 | 2.23 |
| | Iodine Value (gI2/100g) | | 110 | 0 | 55 | 22 | 11 |
| Friction Characteristics | Sliding speed (m/s) | 0.9 | 0.0170 | 0.0075 | 0.0048 | 0.0054 | 0.0046 |
| | | 0.75 | 0.0173 | 0.0071 | 0.0050 | 0.0060 | 0.0060 |
| | | 0.6 | 0.0180 | 0.0070 | 0.0047 | 0.0063 | 0.0056 |
| | | 0.45 | 0.0186 | 0.0089 | 0.0050 | 0.0069 | 0.0060 |
| | | 0.3 | 0.0197 | 0.0120 | 0.0083 | 0.0098 | 0.0080 |

**[Table 2]**

| Base oil No. | | | Base oil 6 | Base oil 7 | Base oil 8 | Base oil 9 |
|---|---|---|---|---|---|---|
| Composition of base oil (% by mass) | α-olefin | A2 | 20 | - | 60 | 50 |
| | | A3 | - | 20 | - | - |
| | Hydrocarbon oil other than α-olefin | B1 | 80 | 80 | 40 | 40 |
| | | B2 | - | - | - | 10 |
| Properties of refrigerating machine oil | Kinematic viscosity at 40°C (mm²/s) | | 2.12 | 2.53 | 2.07 | 2.09 |
| | Iodine Value (g12/100g) | | 25 | 18 | 78 | 65 |
| Friction Characteristics | Sliding speed (m/s) | 0.9 | 0.0037 | 0.0053 | 0.0039 | 0.0035 |
| | | 0.75 | 0.0049 | 0.0058 | 0.0039 | 0.0036 |
| | | 0.6 | 0.0048 | 0.0053 | 0.0040 | 0.0037 |
| | | 0.45 | 0.0051 | 0.0054 | 0.0043 | 0.0037 |
| | | 0.3 | 0.0070 | 0.0069 | 0.0055 | 0.0048 |

## Claims

1. Use of a base oil in a refrigerating machine oil for reducing a friction coefficient, the base oil comprising:
an α-olefin; and
a hydrocarbon oil other than the α-olefin,
wherein the α-olefin is represented by the following formula (1): 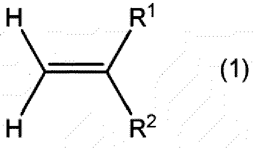 wherein R¹ and R² represent a linear alkyl group, and wherein the α-olefin has a kinematic viscosity at 40°C of less than 20 mm²/s*,* and the hydrocarbon oil other than the α-olefin has a kinematic viscosity at 40°C of less than 20 mm²/s.

2. The use of the base oil according to claim 1, wherein R¹ and R² in formula (1) represent a linear alkyl group having 6 or more carbon atoms.

3. The use of the base oil according to claim 1, wherein R¹ and R² in formula (1) represent a linear alkyl group having 10 or more carbon atoms

4. The use of the base oil according to claim 1 or 2, wherein the content of the α-olefin is 5% by mass or more based on the total amount of the base oil.

5. A refrigerating machine oil comprising a base oil,
the base oil comprising an α-olefin and a hydrocarbon oil other than the α-olefin,
wherein the α-olefin is represented by the following formula (1): 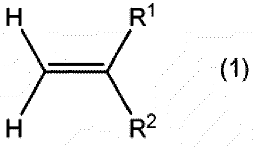
wherein R¹ and R² represent a linear alkyl group, and wherein the α-olefin has a kinematic viscosity at 40°C of less than 20 mm²/s*,* and the hydrocarbon oil other than the α-olefin has a kinematic viscosity at 40°C of less than 20 mm²/s.

6. Use of the refrigerating machine oil according to claim 5 with a refrigerant comprising a hydrocarbon.

7. A working fluid composition comprising:
the refrigerating machine oil according to claim 5; and
a refrigerant.

8. The working fluid composition according to claim 7, wherein the refrigerant comprises a hydrocarbon.

## Patentansprüche

1. Verwendung eines Basisöls in einem Kältemaschinenöl zum Verringern eines Reibungskoeffizienten, wobei das Basisöl Folgendes umfasst:
ein α-Olefin; und
ein von dem α-Olefin verschiedenes Kohlenwasserstofföl,
wobei das α-Olefin durch die folgende Formel (1) dargestellt wird: 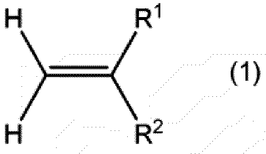
wobei R¹ und R² eine lineare Alkylgruppe darstellen und wobei das α-Olefin eine kinematische Viskosität bei 40 °C von weniger als 20 mm²/s aufweist und das von dem α-Olefin verschiedene Kohlenwasserstofföl eine kinematische Viskosität bei 40 °C von weniger als 20 mm²/s aufweist.

2. Verwendung des Basisöls nach Anspruch 1, wobei R¹ und R² in Formel (1) eine lineare Alkylgruppe mit 6 oder mehr Kohlenstoffatomen darstellen.

3. Verwendung des Basisöls nach Anspruch 1, wobei R¹ und R² in Formel (1) eine lineare Alkylgruppe mit 10 oder mehr Kohlenstoffatomen darstellen

4. Verwendung des Basisöls nach Anspruch 1 oder 2, wobei der Gehalt an α-Olefin 5 Massen-% oder mehr beträgt, bezogen auf die Gesamtmenge des Basisöls.

5. Kältemaschinenöl, umfassend ein Basisöl,
wobei das Basisöl ein α-Olefin und ein von dem α-Olefin verschiedenes Kohlenwasserstofföl umfasst,
wobei das α-Olefin durch die folgende Formel (1) dargestellt wird: 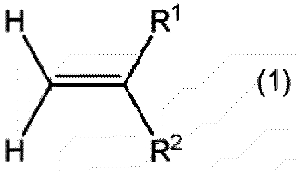
wobei R¹ und R² eine lineare Alkylgruppe darstellen und wobei das α-Olefin eine kinematische Viskosität bei 40 °C von weniger als 20 mm²/s aufweist und das von dem α-Olefin verschiedene Kohlenwasserstofföl eine kinematische Viskosität bei 40 °C von weniger als 20 mm²/s aufweist.

6. Verwendung des Kältemaschinenöls nach Anspruch 5 mit einem Kältemittel, das einen Kohlenwasserstoff umfasst.

7. Arbeitsfluidzusammensetzung, umfassend:
das Kältemaschinenöl nach Anspruch 5; und
ein Kältemittel.

8. Arbeitsfluidzusammensetzung nach Anspruch 7, wobei das Kältemittel einen Kohlenwasserstoff umfasst.

## Revendications

1. Utilisation d'une huile de base dans une huile de machine frigorifique pour réduire un coefficient de frottement, l'huile de base comprenant :
une α-oléfine ; et
une huile hydrocarbonée autre que l'α-oléfine,
l'α-oléfine étant représentée par la formule (1) suivante : 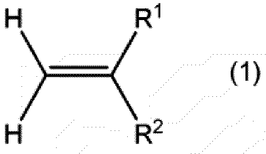
où R¹ et R² représentent un groupe alkyle linéaire, et où l'α-oléfine présente une viscosité cinématique à 40 °C inférieure à 20 mm²/s*,* et l'huile hydrocarbonée autre que l'α-oléfine présente une viscosité cinématique à 40 °C inférieure à 20 mm²/s.

2. Utilisation de l'huile de base selon la revendication 1, dans laquelle R¹ et R² dans la formule (1) représentent un groupe alkyle linéaire comportant 6 atomes de carbone ou plus.

3. Utilisation de l'huile de base selon la revendication 1, dans laquelle R¹ et R² dans la formule (1) représentent un groupe alkyle linéaire comportant 10 atomes de carbone ou plus

4. Utilisation de l'huile de base selon la revendication 1 ou 2, dans laquelle la teneur en α-oléfine est de 5 % en masse ou plus par rapport à la quantité totale de l'huile de base.

5. Huile de machine frigorifique comprenant une huile de base,
l'huile de base comprenant une α-oléfine et une huile hydrocarbonée autre que l'α-oléfine,
l'α-oléfine étant représentée par la formule (1) suivante : 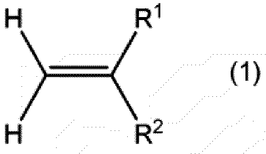
où R¹ et R² représentent un groupe alkyle linéaire, et où l'α-oléfine présente une viscosité cinématique à 40 °C inférieure à 20 mm²/s*,* et l'huile hydrocarbonée autre que l'α-oléfine présente une viscosité cinématique à 40 °C inférieure à 20 mm²/s.

6. Utilisation de l'huile de machine frigorifique selon la revendication 5 avec un fluide frigorigène comprenant un hydrocarbure.

7. Composition de fluide de travail comprenant :
l'huile de machine frigorifique selon la revendication 5 ; et
un fluide frigorigène.

8. Composition de fluide de travail selon la revendication 7, dans laquelle le fluide frigorigène comprend un hydrocarbure.
